# EUROPÄISCHE PATENTSCHRIFT

(11) **EP 2 492 526 B1**
(45) Veröffentlichungstag und Bekanntmachung des Hinweises auf die Patenterteilung: **18.10.2017**
(21) Anmeldenummer: 12001167.1
(22) Anmeldetag: 22.02.2012
(51) Int. Cl.: F16C 13/00, C23F 11/00, C23F 13/00

(54) **Walze und Walzenbeschichtungsverfahren**
Roller and roller coating method
Cylindre et procédé de revêtement de cylindres

(30) Priorität: 22.02.2011 DE 102011012050; 09.05.2011 DE 102011101046
(43) Veröffentlichungstag der Anmeldung: 29.08.2012
(73) Patentinhaber: Richter, Dirk, 52349 Düren (DE)
(72) Erfinder: Richter, Dirk, 52349 Düren (DE)
(74) Vertreter: Reuther, Martin

(56) Entgegenhaltungen:
- WO-A1-88/04371
- DE-B- 1 146 022
- JP-A- S57 156 890
- US-A- 2 625 735

## Beschreibung

Die Erfindung betrifft eine Walze aus einem korrosionsgefährdeten Walzenkörper und einer Beschichtung sowie ein Walzenbeschichtungsverfahren.

Beispielsweise aus der WO 2008/043350 A2 oder aus der WO 2008/052540 A2 sind Walzenbeschichtungen bekannt, welche beispielsweise nach dem Verfahren, welches in der WO 2004/092599 A1 offenbart ist, auf einen Walzenkörper aufgebracht werden können. Hierbei werden häufig Walzenkörper aus korrodierenden bzw. korrosionsgefährdeten Materialien, wie beispielsweise aus Stahl, mit derartigen Beschichtungen versehen, wobei es insbesondere im Bereich der Walzenenden, in welchen eine Naht zwischen dem Walzenkörper und der Kunststoffbeschichtung an die Oberfläche gelangt, zu Korrosionsproblemen kommt. Diese rühren insbesondere daher, dass mit Beginn einer Korrosion die Verbindung zwischen Kunststoffbeschichtung und Walzenkörper nachlässt, so dass die korrosiven Materialien, beispielsweise Wasser bei der Verwendung stählerner Walzenkörper, tiefer in die Naht eindringen kann und der Korrosionsprozess sehr schnell fortschreitet.

So zeigt die DE 10 85 843 B beispielsweise, dass die metallischen Teile einer mit einer Gummischicht beschichteten Walze mittels seitlich aufgesetzter Gummikappen geschützt werden können. Auch die DE 11 46 022 B offenbart eine mit einer Gummischicht beschichtete Walze mit seitlich aufgesetzten Abdeckungen, die ein Eindringen von Schmutz in den Walzenkörper verhindern sollen. Die US 2,625,735 offenbart den Schutz einer unter einer Compar-Beschichtung vorgesehenen Tuchlage gegen Tinte durch Abdeckungen aus Compar. Hinsichtlich der der Verwendung eines nicht korrodierenden Materials bzw. hinsichtlich der Vermeidung einer Korrosion der Walzenkörper geben diese Druckschriften jedoch keinerlei Hinweise. Selbiges gilt für den Gegenstand der DE 12 29 548 B, bei welcher jedoch eine Beschichtung mit einem Duroplast erfolgt und der Walzenkörper selbst mit seinen Randbereichen eine Einfassung der Beschichtung als Stoßschutz bildet.

Eine thermische Isolierung, welche wie eine Kappe auf eine Stirnseite aufgesetzt ist, offenbart die DE 198 22 531 A1. Auch diese Walze weist eine Beschichtung auf, die entsprechend des Aufgabengebiets dieser Walze sehr gut thermisch leiten soll, wobei jedoch aufgrund der Kappe die nutzbare Breite der Walze erheblich reduziert ist.

Mit der Vermeidung von Korrosion beschäftigt sich hingegen die DE 20 2006 017 175 U1, wobei hier ein Befestigungsring für einen aufgewickelten Belag, der ebenfalls die nutzbare Breite der Walze erheblich reduziert, gegen Korrosion durch eine auf ihn aufgetragene die Korrosion hemmende Schicht geschützt werden soll, wozu ein flüssiges die Korrosion hemmendes Mittel in entsprechende Ausnehmungen gebracht wird. Auch die DE 10 93 626 B beschreibt einen Anwendungsfall einer Walze in einer korrodierenden Umgebung, wobei hier eine Korrosion des Wellenlagers verhindert werden soll. Der Schutz des Walzenkörpers gegen Korrosion ist bei diesen Druckschriften jedoch nicht thernatisiert.

Die nutzbare Breite reduzierende Anschlussteile, welche die Walzenzapfen einer ein im Schleudergussverfahren hergestelltes Doppelrohr aufweisenden Walze tragen, offenbart die WO 1988/004371 A1, wobei zwischen dem Doppelrohr und den Anschlussteilen eine voll wirksame Schweißverbindung über die gesamte Tiefe und eine durch die ausgebildete Schweißnaht nicht beeinträchtigte Stabilität der Mantelfläche des Walzenkörpers gewährleistet werden soll.

Darüber hinaus offenbart die CH 673 878 A5 einen Ansatz zum Schutz eines Walzenkörpers gegen Korrosion, bei welchem keine Beschichtung sondern ein Blech aus rostfreiem Material um einen Walzenkörper gelegt und entsprechend über eine Schweißnaht dichtend zu einem Außenrohr verbunden wird. Durch Stirnscheiben aus identischem oder ähnlichem Material wie das Material des Blechs, die zwischen dem Außenrohr und dem Walzenkörper eingebettet und mit dem Außenrohr dichtend verschweißt sind, kann ein Korrosionsschutz für den Walzenkörper erreicht werden. Allerdings belässt diese nicht gattungsgemäße Lösung wenig Spielraum für die Materialwahl der Walzenoberfläche sowie erhebliche Probleme im Bereich der Schweißnaht, die letztlich eine Störstelle in einer an sonst glatten Walzenoberfläche bildet.

Es ist Aufgabe vorliegender Erfindung, hier Abhilfe zu schaffen.

Bei einer nicht erfindungsgemäßen Lösung wird eine Walze aus einem korrosionsgefährdeten Walzenkörper und einer Beschichtung, wobei der Walzenkörper einerseits aus einem zylinderförmigen durch ein Rohr gebildeten Bereich und andererseits aus Randbereichen gebildet ist, die Walzenzapfen tragen oder aufweisen, vorgeschlagen und wobei sich die Walze durch ein am Walzenende angeordnetes metallisches Dichtelement aus nicht korrodierendem Material auszeichnet, das die Naht zwischen dem Walzenkörper und der Beschichtung überdeckt und stoffschlüssig mit der Beschichtung verbunden ist.

Hierbei definiert sich ein Walzenkörper einerseits aus einem zylinderförmigen Bereich, der häufig durch ein Rohr gebildet wird, und aus Randbereichen, die letztlich eine Lagerung des Walzenkörpers ermöglichen. Hierbei können die Randbereiche bei durch ein Rohr gebildeten zylinderförmigen Bereichen durch Scheiben oder auch durch filigranere Stützkörper, wie beispielsweise durch zwei Ringe mit dazwischen liegenden Stützstreben oder lediglich durch Stützstreben gebildet werden, die dann Walzenzapfen tragen oder aufweisen. Die Randbereiche können hierbei auch wesentlich komplexer, beispielsweise mit Lagern, wie in der DE 11 46 022 B offenbart, versehen sein.

Als Beschichtung kommen in diesem Zusammenhang beispielsweise jede Art bekannter Kunststoffbeschichtungen in Frage. Insbesondere können hier Gummi, auch natürliches Gummi, Epoxidbeschichtungen oder andere Polymerbeschichtungen zum Einsatz kommen. Ebenso können diese Beschichtungen verhältnismäßig komplex aufgebaut sein und beispielsweise mehrere Komponenten sowie ergänzend etwaige Partikel, Hartstoff oder Antihaftpartikel, und ähnliche umfassen, wie dieses unter anderem auch aus dem eingangs genannten Stand der Technik bekannt sind. Ebenso kommen als Beschichtung auch andere Arten von Beschichtungen für Walzen, wie metallische Beschichtungen oder auch Hartstoffbeschichtungen, thermisch aufgetragene Beschichtungen, gesinterte Beschichtungen oder ähnliche Beschichtungen in Frage. Wie unmittelbar nachvollziehbar, werden derartige Beschichtungen, insbesondere in Abweichung zu Plattierungen oder ähnlichem, in fließ- oder streichfähigen Form bzw. aus einem gasförmigen Zustand aufgetragen, um dann auf dem Walzenkörper auszuhärten oder sich sonstwie zu einer Beschichtung auszubilden.

Durch das metallische Dichtelement aus nicht korrodierendem Material, welches beispielsweise aus Edelstahl oder Nickel bestehen kann, kann die Naht auf verhältnismäßig kostengünstige und einfache Weise vor dem korrodierend wirksamen Material, wie beispielsweise Wasser, geschützt werden. Hierbei erweist sich ein metallisches Dichtelement als verhältnismäßig stabil, auch wenn die Walze verhältnismäßig großen Belastungen, beispielsweise auch verhältnismäßig hohen Rotationsgeschwindigkeiten, unterzogen wird. Dadurch, dass das metallische Dichtelement aus nicht korrodierendem Material besteht, verbleibt die Naht zwischen dem metallischen Dichtelement und der Beschichtung unbeeinflusst, auch wenn das metallische Dichtelement im Bereich dieser Naht mit dem korrodierend wirksamen Material, wie beispielsweise mit Wasser, in Kontakt kommt.

In diesem Zusammenhang sei betont, dass im Sinne vorliegender Erfindung die Bezeichnung "nicht korrodierendes Material" relativ auf die Korrosionsbeständigkeit des Materials, aus welchem der Walzenkörper gebildet ist, anzusehen ist. Hierbei kommt es in der Regel nicht auf das Maß der Reaktionsfreudigkeit des jeweiligen Walzenkörpers bzw. des Materials mit dem korrodierenden Werkstoff an sondern auf das Maß, mit welchem die Verbindung zwischen der Beschichtung und dem Walzenkörpers aufgrund des korrodierend wirksamen Materials geschädigt wird.

Als erste Lösung schlägt die Erfindung eine Walze aus einem korrosionsgefährdeten Walzenkörper und einer Beschichtung vor, wobei der Walzenkörper einerseits aus einem zylinderförmigen durch ein Rohr gebildeten Bereich und andererseits aus Randbereichen gebildet ist, die Walzenzapfen tragen oder aufweisen, und wobei sich die Walze durch ein am Walzenende auf dem Walzenkörper unter der Beschichtung angeordnetes Dichtelement aus einem von dem Material der Beschichtung abweichendem Dichtmaterial auszeichnet, das die Naht zwischen dem Walzenkörper und der Beschichtung überdeckt.

Insofern weicht diese Anordnung beispielsweise von der Walze nach der EP 0 293 429 B1 ab, welcher ein entsprechendes Dichtelement gerade nicht auf dem Walzenkörper sondern unter diesem angeordnet ist.

Durch die radial außen liegende Überdeckung des Dichtelements mittels der Beschichtung wird das Dichtelement durch die Beschichtung stabilisiert, so dass auch nicht metallische Dichtelement dementsprechend zur Anwendung kommen können. Darüber hinaus kann für das Dichtelement ein Material gewählt werden, welches hinsichtlich seiner dichtenden Eigenschaften optimiert ist und möglicherweise ansonsten den Belastungen beim Betrieb der Walze nicht ganz gewachsen ist. Insbesondere ist es mithin möglich, ein Dichtelement zu nutzen, welches eine höhere Adhesivität zu dem Walzenkörper besitzt, so dass ein Eindringen des korrodierend wirksamen Materials vermieden und ein Beginn des Korrosionsprozesses wirksam im Ansatz erheblich verzögert wird. Hierdurch kann dementsprechend die Standzeit der Walze verlängert werden. Ebenso kann als Dichtelement zur Anwendung kommen, welches eine höhere Adhesivität zu der Beschichtung besitzt, so dass auch hier ein Eindringen des korrodierend wirksamen Materials vermieden und ein Beginn des Korrosionsprozesses wirksam im Ansatz erheblich verzögert wird.

In diesem Zusammenhang versteht es sich, dass als unter der Beschichtung angeordnetes Dichtelement insbesondere metallische Dichtelemente aus nicht korrodierendem Material zur Anwendung kommen können. Ebenso können beispielsweise Kunststoffe, welche eine hohe Adhesivität zu dem Walzenkörper aufweisen, genutzt werden, wie beispielsweise verhältnismäßig harte Epoxide, welche dann durch die Beschichtung vor einer zu hohen Belastung geschützt werden können.

Dadurch, dass das Dichtelement radial unter der Beschichtung angeordnet ist, kann diese Beschichtung möglichst weit axial an das Walzenende herangeführt werden, so dass bei geeigneter Ausgestaltung der Walze die Walzenbreite dementsprechend maximiert werden kann.

Ebenso schlägt die Erfindung ein Walzenbeschichtungsverfahren vor, welches sich dadurch auszeichnet, dass zunächst ein metallisches Dichtelement am Walzenende angebracht und anschließend eine Beschichtung auch über das metallische Dichtelement aufgetragen wird. Eine derartige Vorgehensweise ermöglicht es, das metallische Dichtelement äußerst effektiv unterhalb der Beschichtung anzuordnen, wie dieses bereits vorstehend erläutert wurde.

Alternativ, jedoch nicht erfindungsgemäß hierzu wird ein Wulzenbeschichtungsverfahren vorgeschlagen, welches sich dadurch auszeichnet, dass zunächst eine Beschichtung bis zum Walzenende aufgetragen und anschließend ein die Naht zwischen Beschichtung und Walzenkörpers überdeckendes Dichtelement aus einem von dem Material der Beschichtung abweichenden Dichtmaterial am Walzenende angebracht wird. Hierbei versteht es sich, dass ein derartiges Dichtelement einerseits metallisch, vorzugsweise aus einem nicht korrodierendem Metall, oder auch aus Kunststoff bereitgestellt werden kann. Diese Vorgehensweise hat insbesondere den großen Vorteil, dass letztlich ein an sich bekanntes Beschichtungsverfahren, wie dieses beispielsweise aus der WO 2004/092599 A1 zum Auftragen einer Kunststoffbeschichtung bekannt ist, genutzt werden kann, ohne dass hier irgendwelche Modifikationen oder bis dato nicht bekannte Vorarbeiten notwendig wären.

Es versteht sich, dass das Dichtelement insbesondere bei dem letztgenannten Verfahren, beispielsweise axial auf den Walzenkörper und die Beschichtung im Bereich der Naht zwischen Walzenkörper und Beschichtung aufgesetzt werden kann- Gegebenenfalls kann zwischen dem Dichtelement, welches beispielsweise aus Metall gebildet sein kann, noch eine Gummidichtung oder ein anderes dichtendes Material vorgesehen werden. Eine derartige Vorgehensweise kann zwar auf einfache Weise auch bei bestehenden Walzen vorgesehen werden, führt jedoch dazu, dass axial für das Dichtelement noch Bauraum vorgesehen werden muss. Darüber hinaus ist unter bestimmten Umständen damit zu rechnen, dass bei längeren Laufzeiten das Dichtungsmaterial altert und korrodierend wirksames Material langsam in die Naht zwischen Beschichtung und Dichtelement einkriecht. Dieses kann insbesondere auch dann geschehen, wenn kein Gummi zwischen dem Dichtelement und der Beschichtung vorgesehen ist.

Dementsprechend ist es von Vorteil, wenn das Dichtelement stoffschlüssig mit der Beschichtung verbunden ist. Dieses kann auf einfache Weise dadurch gewährleistet werden, dass zunächst das Dichtelement am Walzenende angebracht und anschließend die Beschichtung aufgetragen wird. Dieses kann beispielsweise in flüssiger oder pastöser Form geschehen, ebenso ist es möglich, ein Pulver aufzubringen, welches nachträglich durch Erwärmen oder Sintern stoffschlüssig mit dem Dichtelement verbunden wird. Mit dem Aushärten der Beschichtung folgt eine stoffschlüssige Verbindung unmittelbar.

Insbesondere, wenn das Dichtelement ebenfalls aus Kunststoff gebildet ist, ist es von Vorteil, wenn diese stoffschlüssig mit dem Walzenkörper verbunden ist.

Letzteres ist bei der Verwendung metallischer Dichtelemente, welche beispielsweise auf die Naht zwischen Beschichtung und Walzenkörper aufgesetzt werden können, nicht ohne weiteres gegeben. Um hier eine gute Verbindung bereitzustellen, kann das Dichtelement beispielsweise als Ring ausgebildet und auf dem Walzenkörper aufgeschrumpft sein. Durch den Schrumpfungsprozess entsteht eine reibschlüssige Verbindung, welche verhältnismäßig dicht ist und in der Regel bereits sehr effektiv ein Einkriechen von korrodierend wirksamen Material, wie beispielsweise von Wasser, zwischen Dichtelement und Walzenkörper verhindern kann. Besonders vorteilhaft bei der Verwendung metallischer Dichtelemente ist es jedoch, wenn auch diese stoffschlüssig mit dem Walzenkörper verbunden sind. Hierzu kann das Dichtelement beispielsweise an-, auf- oder eingeschweißt mit dem Walzenkörper verbunden werden. Ebenso können diesbezüglich auch Löt- oder Lotverbindungen entsprechend genutzt werden. Darüber hinaus ist es auch denkbar, das Dichtelement durch Auftragsschweißen, beispielsweise durch Auftragsschweißen von Edelstahl, bereitzustellen. Ebenso kann das Dichtelement auftragsgelötet, aufgespritzt und anschließend eingesintert, thermisch aufgetragen bzw. galvanisch aufgebracht werden. Letzteres kann beispielsweise mittels Chrom durch ein Verchromen bewirkt werden. Thermische Beschichtungen können beispielsweise für Hartmetalle, Metalle und Keramiken als Dichtelemente genutzt werden, um diese aufzutragen.

Je nach konkreter Umsetzung vorliegender Erfindung kann das Dichtelement, nachdem es auf den Walzenkörpers aufgebracht ist, noch einer Nachbearbeitung, wie beispielsweise einem Abdrehen, einer Begradigung oder einem Sintern- bzw. Heilungsprozess unterzogen werden.

Je nach konkreter Umsetzung vorliegender Erfindung kann das Dichtelement in einer Ausnehmung des Walzenkörpers angeordnet sein. Dieses ermöglicht es insbesondere, einen etwaigen radialen Überstand, welcher durch das Dichtelement bedingt ist, auf ein Minimum bzw. auf 0 herabzusenken, so dass die Beschichtung mit gleichförmiger bzw. nahezu gleichförmiger Dicke auch bis zum Walzenende hin geführt werden kann.

Dementsprechend ist es bei der Walzenbeschichtung von Vorteil, wenn zunächst vor dem Auftragen der Beschichtung und dem Anbringen des Dichtelements an dem Walzenende eine Ausnehmung vorgesehen wird, wobei eine derartige Ausnehmung in der Regel lediglich einmal bereitgestellt werden muss, da bei einem Erneuern der Beschichtung diese Ausnehmung nach wie vor zur Verfügung steht.

Auch kann die Beschichtung am Walzenende einen einstückig nach radial innen weisenden Fortsatz aufweisen. Ein derartiger Fortsatz kann beispielsweise in eine vorgenannte Ausnehmung hineinragen oder auch den Walzenkörper am Walzenende umgreifen. Durch einen derartigen, nach radial innen weisenden Fortsatz verlagert sich die Naht zwischen der Beschichtung und einer anderen Baugruppe, sei es beispielsweise das Dichtelement oder sei es der Walzenkörper selbst, nach radial innen, so dass sie per se bereits weiter von der Walzenoberfläche entfernt ist und somit Angriffen des korrodierenden Materials bzw. mechanischen Belastungen weniger unterliegt. In diesem Zusammenhang sei erwähnt, dass ein derartiger einstückig nach radial innen weisender Fortsatz bei einer Walze aus einem korrosionsgefährdeten Walzenkörper und einer Beschichtung auch unabhängig von den übrigen Merkmalen vorliegender Erfindung entsprechend vorteilhaft ist.

Je nach konkreter Umsetzung vorliegender Erfindung kann, unter Weglassen einer Ausnehmung, der Walzenkörper bis an das Walzenende heran zylinderförmig ausgebildet und das Dichtelement auf den Walzenkörper radial aufgesetzt sein. Bei einer derartigen Ausgestaltung kann die Integrität des Walzenkörpers weitgehend erhalten bleiben, wobei insbesondere bei einem ausreichend dünnen Dichtelement die Stärke der Beschichtung im Bereich des Dichtelements nur unwesentlich bzw. lediglich in vertretbarem Maße vermindert werden muss. Dieses gilt insbesondere, wenn das Dichtelement beispielsweise galvanisch auf den Walzenkörper aufgebracht oder sonstwie auf diesen aufgetragen wurde, wie beispielsweise durch Aufspritzen und Einsintern oder durch Auftrags schweißen oder- löten.

Das Dichtelement kann ggf. axial über die Beschichtung hinauskragen, was insbesondere dann umgesetzt werden kann, wenn das Dichtelement durch eine Scheibe gebildet ist, die auf den Walzenkopf oder das Walzenende aufgesetzt wird. Bei einer derartigen Anordnung dient das Dichtelement insbesondere auch als Stoßschutz für die übrige Walze und insbesondere für die Baugruppen, die exponiert am Walzenkopf bzw. -ende zu finden sind.

Um dieser Funktion als Stoßschutz besonders gut nachzukommen, kann das Dichtelement radial bündig mit der äußeren Beschichtungsoberfläche ausgebildet sein oder hierüber radial hinauskragen. Auf diese Weise wird auch unabhängig von den übrigen Merkmalen ein Stoßschutz für die Beschichtung bereitgestellt, der gerade im Bereich des Walzenendes auftretende Beschädigungen der Beschichtung minimiert und auf diese Weise ein Eindringen von Wasser möglichst vermeiden kann. Dementsprechend schlägt vorliegende Erfindung als Lösung für die oben genannte Aufgabe auch eine Walze aus einem korrosionsgefährdeten Walzenkörper und einer Beschichtung vor, wobei der Walzenkörper einerseits aus einem zylinderförmigen durch ein Rohr gebildeten Bereich und andererseits aus Randbereichen gebildet ist, die Walzenzapfen tragen oder aufweisen, und wobei sich die Walze durch ein am Walzenende an dem Walzenkörper angeordnetes Stoßschutzelement aus einem von dem Material der Beschichtung, abweichenden Stoßschutzmaterial auszeichnet, wobei das Stoßschutzelement radial bündig mit der äußeren Beschichtungsoberfläche ausgebildet ist oder hieruber radial hinauskragt.

Hierbei kann dieser Stoßschutzelement insbesondere aus nicht korrodierendem Metall oder aus einem von dem Material der Beschichtung abweichenden Dichtmaterial als Dichtelement ausgebildet sein und die Naht zwischen dem Walzenkörper und der Beschichtung überdecken, so dass auch auf diese Weise die Gefahr von Korrosion zusätzlich minimiert wird.

Hierbei versteht es sich, dass das Stoßschutzelement als zu dem Walzenkörper zusätzliche Baugruppe ausgebildet ist und insbesondere in der Regel tragende Funktionen, wie diese die Walzenzapfen, beispielsweise aus der EP 0 293 429 B1, übernehmen, nicht erfüllen.

Um ein Stoßschutzelement an einem Walzenende vorzusehen, wird erfindungsgemäß desweiteren ein Walzenbeschichtungsverfahren vorgeschlagen, welches sich dadurch auszeichnet, dass zunächst das oben beschriebene Stoßschutzelement am Walzenende angebracht und eine Beschichtung aufgetragen wird und anschließend die Beschichtung und das Stoßschutzelement radial bündig abgetragen werden. Auf diese Weise kann einfach und betriebssicher ein maximal nutzbare Walzenoberfläche bereitgestellt werden, die dennoch am Walzenkopf einen Stoßschutz und ggf. sogar ein entsprechendes Dichtelement aufweist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Gesamtansicht einer Walze aus einem korrosionsgefahrdeten Walzenkörper und einer Beschichtung;
- Figur 2: eine Ausschnittsvergrößerung des Walzenendes mit einem ersten Dichtelement;
- Figur 3: eine Ausschnittsvergrößerung des Walzenendes mit einem zweiten Dichtelement;
- Figur 4: eine Ausschnittsvergrößerung des Walzenendes mit einem dritten Dichtelement;
- Figur 5: eine Ausschnittsvergrößerung des Walzenendes mit einem vierten Dichtelement;
- Figur 6: eine Ausschnittvergrößerung des Walzenendes mit einem fünften nicht erfindungsgemäßen Dichtelement;
- Figur 7: eine Ausschnittvergrößerung des Walzenendes mit einem sechsten nicht erfindungsgemäßen Dichtelement;
- Figur 8: eine Ausschnittvergrößerung des Walzenendes mit einem siebten Dichtelement;
- Figur 9: eine Ausschnittvergrößerung des Walzenendes mit einem achten Dichtelement; und
- Figur 10: eine Ausschnittvergrößerung des Walzenendes mit einem neunten Dichtelement.

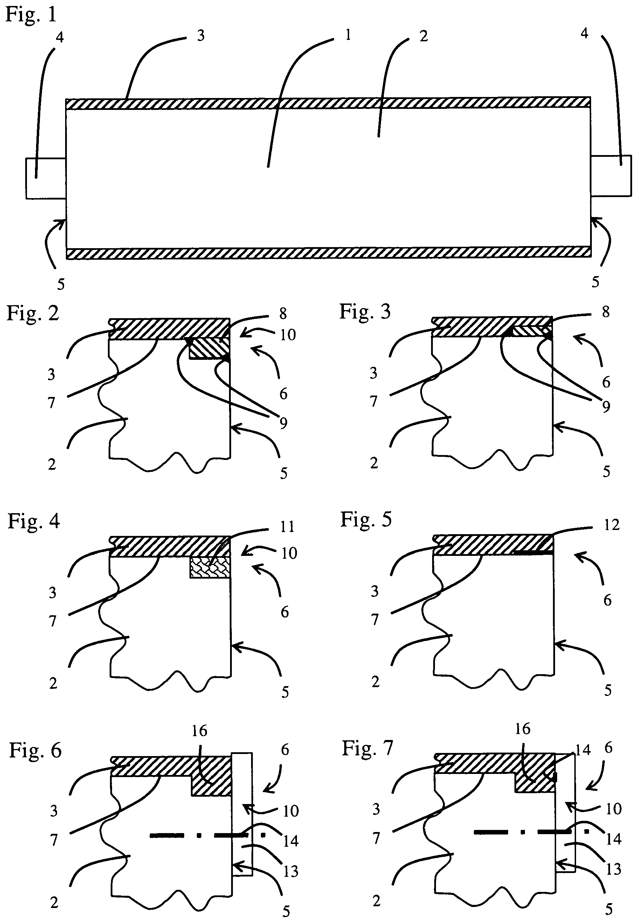

Wie in Figur 1 schematisch dargestellt, besteht eine beschichtete Walze 1 aus einem Walzenkörper 2 und einer Beschichtung 3, wobei in der Regel der Walzenkörper aus einem verhältnismäßig korrosionsgefährdeten Material, wie beispielsweise Stahl, gebildet ist.

Eine derartige Walze 1 ist im Wesentlichen zylinderförmig aufgebaut und kann mithin um eine Zylinderachse, welche - da dieses hinlänglich bekannt ist - in Figur 1 nicht explizit dargestellt ist, rotieren. Für eine geeignete Lagerung weist die Walze 1 Walzenzapfen 4 auf, wobei - je nach konkreter Umsetzung vorliegender Erfindung - ggf. auch eine andere Lagerung der Walze vorgesehen sein kann.

Hierbei ist zu berücksichtigen, dass derartige Walzen verhältnismäßig groß sein können und Längen ab 1.5 m bis zu 8 m oder 9 m oder sogar darüber sowie Durchmesser ab 20 cm bis zu Durchmessem über 1,5 m oder sogar über 2 m aufweisen können. Gerade bei derartig großen Walzen ist die Verwendung einer Beschichtung 3 bzw. eines Walzenkörpers 2 aus einem korrosionsgefährdeten Material insbesondere aus Kostengründen nicht nur angezeigt sondern unabdingbar.

An den jeweiligen axialen Enden des Walzenkörpers 2 bzw. der Beschichtung 3 kann ein Walzenende 5 definiert werden, was häufig auch als Walzenkopf bezeichnet wird. Wie unmittelbar ersichtlich, dringt an dieser Stelle die Verbindungsfläche bzw. Naht 7 zwischen dem Walzenkörper 2 und der Beschichtung 3 an die Oberfläche der Walze. Hier besteht ein erhöhtes Risiko, dass, sollte an dieser Stelle der Walzenkörper 2 korrodieren, die bis dahin innige Verbindung zwischen der Beschichtung 3 und dem Walzenkörper 2 aufgebrochen wird, insbesondere wenn der Walzenkörper 2, wie dieses bei Strahl geschehen kann, durch die Korrosion bedingt aufblüht oder ähnliche Prozesse stattfinden, welche die Verbindung zwischen Beschichtung 3 und Walzenkörper 2 schwächen. An derartigen Stellen kann dann vermehrt Wasser oder sonstiges korrodierend wirksames Material eindringen, so dass der Korrosionsprozess gerade an dieser Stelle besonders schnell voranschreitet.

Insofern kann, wie dieses insbesondere die vorliegende Erfindung vorschlägt und dieses bei einem ersten Ausführungsbeispiel anhand der Figur 2 schematisch dargestellt ist, in diesem Bereich ein Dichtelement 6 vorgesehen sein, welches die Naht 7 überdeckt.

Bei dem in Figur 2 dargestellten Ausführungsbeispiel ist das Dichtelement 6 als ein Edelstahlring 8 ausgebildet, welcher in eine Ausnehmung 10 des Walzenkörpers 2 eingebracht und anschließend mit dem Walzenkörper 2 mittels einer Dichtschweißung 9 in den Kontaktbereichen zwischen dem Edelstahlring R und dem Walzenkörper 2 verschweißt ist. Im Anschluss hieran wurde die Beschichtung 3 aufgetragen.

Auf diese Weise überdeckt der Edelstahlring 8 bzw. das Dichtelement 6 die Naht 7 zwischen Walzenkörper 2 und Beschichtung 3, so dass lediglich Nahtflächen zwischen der Beschichtung 3 und dem Edelstahlring 8 bzw. zwischen dem Edelstahlring 8 und dem Walzenkörper 2 nach außen treten. Durch die besser Verbindung zwischen dem Dichtelement 6 und der Beschichtung 3 bzw. zwischen dem Dichtelement 6 und dem Walzenkörper 2 kann die Standzeit der Walze 1 vergrößert werden.

In einer alternativen Ausgestaltung des Ausführungsbeispiels nach Figur 2 kann statt Edelstahl beispielsweise auch Nickel oder ein anderes Material diesbezüglich zur Anwendung kommen.

Bei dem in Figur 3 dargestellten Ausführungsbeispiel, welches im Wesentlichen dem Ausführungsbeispiel nach Figur 2 entspricht, so dass identisch wirkende Baugruppen auch identisch beziffert sind, wurde auf die Ausnehmung 10 verzichtet und ein radial verhältnismäßig dünner Edelstahlring 8 auf den Walzenkörper 2 aufgesetzt und dort mittels Dichtschweißungen 9 verschweißt. Auch diese Gesamtanordnung wurde anschließend mit der Beschichtung 3 versehen, wobei, durch den Edelstahlring 8 bedingt, die Beschichtung 3 im Bereich des Walzenendes 5 radial etwas dünner ausfällt als im übrigen Bereich der Walze 1.

Es versteht sich, dass bei einer alternativen Umsetzung der Ausführungsbeispielen nach Figuren 2 und 3 ein Ring, sei es ein Edelstahlring 8 oder auch ein Ring aus alternativen, nicht korrodierenden Materialien, auf jede erdenklich Weise auf den Walzenkörper 2 aufgebracht werden kann, solange eine ausreichende Abdichtung und Stabilität gewährleistet ist. So kann ein derartiger Ring beispielsweise auch aufgeschrumpft und/oder festgelötet werden. Ebenso kann das Aufschrumpfen auch mit einer Verschweißung, insbesondere der Dichtschweißung 9, kombiniert werden.

Alternativ zu der Verwendung eines Ringes kann, wie dieses schematisch in Figur 4 dargestellt ist, das Dichtelement 6 durch eine Edelstahlauftragsschweißung 11, welche bei dem Ausführungsbeispiel nach Figur 4 in einer Ausnehmung 10 aufgebracht ist, bereitgestellt werden. Auch hier versteht es sich, dass alternativ zu Edelstahl auch andere nicht bzw. weniger als Stahl korrodierende Materialien dementsprechend aufgetragen werden können. Dieses kann beispielsweise auch durch Lötprozesse geschehen.

Auch ein derartiges, aus einer Edelstahlauftragsschweißung 11 oder ähnlichen Maßnahme gebildetes Dichtelement 6 überdeckt die Naht 7 zwischen Walzenkörper 2 und Beschichtung 3 und wirkt dementsprechend abdichtend.

Gegebenenfalls kann das auf diese Weise aufgetragene Material nach dem Auftrag noch einer Nachbehandlung, beispielsweise einem spanendem Abtrag, sei dieses mittels einer gerichteten oder einer ungerichteten Schneide, beispielweise mittels Drehen oder Schleifen, nachbearbeitet werden, um einerseits einen guten und gleichmäßigen Übergang zwischen der radialen Außenfläche des Walzenkörpers 2 und dem Dichtelement 6 und/oder andererseits eine gute Adhäsion zwischen dem Dichtelement 6 und der Beschichtung 3 zu gewährleistet- Hierbei versteht es sich, dass der eine derartige Nachbehandlung auch bei allen anderen Ausführungsbeispielen dementsprechend vorteilhaft sein kann.

Ebenso ist es denkbar, einen Materialauftrag, wie er in Figur 4 dargestellt ist, durch ein Aufspritzen oder sonstiges Auftragen eines entsprechenden Dichtmaterials und ein nachträgliches Einsintern bzw. Versintern bereitzustellen. Gegebenenfalls kann bei einer derartigen Vorgehensweise auf eine Ausnehmung 10 verzichtet werden, wie dieses in Figur 5 exemplarisch dargestellt ist, wobei dort eine Auftragslötung 12 vorgesehen ist, um das entsprechende Dichtelement 6 bereitzustellen. Statt der Auftragslötung 12 kann an dieser Stelle ebenfalls ein Ein- bzw. Aufsintern eines Dichtelements 6 oder ggf. sogar ein galvanischer Auftrag, beispielsweise von Chrom, vorgesehen sein.

Wie unmittelbar ersichtlich, ist bei den in Figuren 2 bis 5 dargestellten Ausführungsbeispielen das Dichtelement 6 sowohl stoffschlüssig mit dem Walzenkörper 2 als auch mit der Beschichtung 3 verbunden. Dadurch, dass bei diesen Ausführungsbeispielen in der Regel die Beschichtung 3 nachträglich aufgebracht wird, wird die stoffschlüssige Verbindung zwischen Beschichtung 3 und Dichtelement 6 auch bei Abwandlungen dieser Ausführungsbeispielen bestehen bleiben, während, beispielsweise wenn das Dichtelement 6 auf den Walzenkörper 2 lediglich aufgeschrumpft wird, eine stoffschlüssige Verbindung zwischen Walzenkörper 2 und Dichtelement 6 nicht zwingend vorhanden sein muss.

Wie in Figuren 6 und 7 dargestellt, sind jedoch auch nicht erfindungsgemäße Anordnungen möglich, bei welchen das Dichtelement 6 nicht stoffschlüssig mit der Beschichtung 3 verbunden ist.

Bei beiden Anordnungen ist jeweils eine Ausnehmung 10 vorgesehen, in welche die Beschichtung 3 über einen Fortsatz 16 hineinragt, wenn diese Beschichtung 3 aufgetragen wird, wodurch die Naht 7 zwischen Walzenkörper 2 und Beschichtung 3 zwar bis an das Walzenende 5 herangeführt wird, letzteres jedoch auf ein verminderten Radius, so dass eine Dichtplatte 13 bei einem geringeren Radius an das Walzenende 5 angesetzt werden kann, beispielsweise durch eine in Figuren 6 und 7 lediglich schematisch dargestellte Schraubverbindung 14. Zwar wird durch eine derartige Ausgestaltung die axiale Länge der Walze 1 im Bereich des Walzenendes 5 vergrößert. Dadurch, dass die Dichtplatte 12 jedoch aufgrund der Ausnehmung 10 und des Fortsatzes 16 nach radial innen versetzt angeordnet werden kann, kann - je nach konkreter Ausgestaltung der Gesamtanordnung - die zu nutzende Breite der Walze 1 hierdurch nur wenig beeinträchtigt sein.

Gegebenenfalls kann zwischen der als Dichtelement 6 dienenden Dichtplatte 13 und der Beschichtung 3 bzw. dem Walzenkörper 2 noch eine Dichtung 15, beispielsweise aus Gummi oder einem sonstigen dichtendem Material, vorgesehen sein.

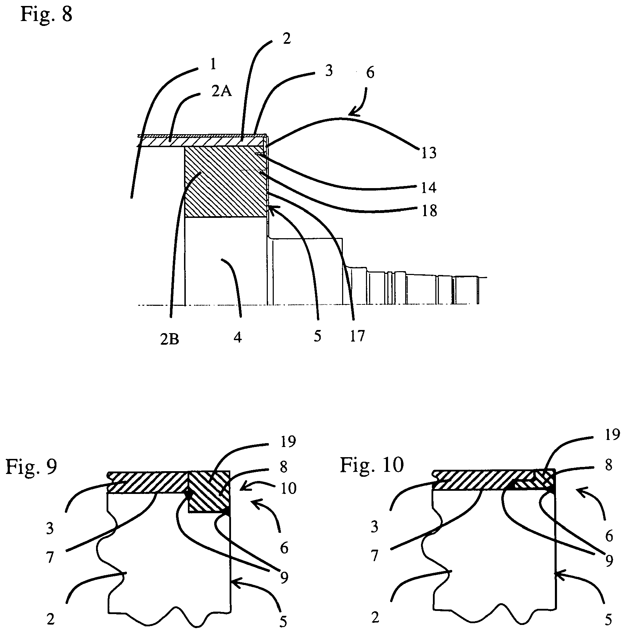

Auch die in Figur 8 dargestellte Anordnung verzichtet auf einen Stoffschluss zwischen Dichtelement 6 und der Beschichtung 3 sowie dem Walzenkörper 2, der bei diesem Ausführungsbeispiel exemplarisch aus einem Rohr 2A aus Stahl und einer das Rohr tragenden Trägerscheibe 2B gebildet ist, in welche der Walzenzapfen 4 eingelassen ist. insofern ist der Walzenkörper 2 dieses Ausführungsbeispiels hohl, was auch bei den anderen hier dargestellten Walzen ohne Weiteres entsprechend umgesetzt werden kann. Die Dichtplatte ist ein scheibenförmiger Edelstahlring, welcher über eine Schraubverbindung 14 mit der Trägerscheibe 2B verbunden ist, wobei anschließend die Beschichtung 3 aufgetragen wurde. Es versteht sich, dass kumulativ bzw. alternativ zu der Schraubverbindung 14 insbesondere auch eine Schweißverbindung oder auch eine sonstige entsprechend wirksame Verbindung vorgesehen sein kann. Anschließend ist an das Walzenende 5 noch ein Abdeckblech 17 mittels einer Schraubverbindung 18 aufgesetzt, welches ebenfalls dichtend wirkt.

Das Abdeckblech 17 dient hierbei auch als Stoßschutz, wie im Übrigen die Dichtplatte 13 bei den Anordnungen nach Figuren 6 und 7 auch, wobei die entsprechenden Stoßschutzelemente, in Figur 8 nicht beziffert, axial über die Beschichtung 3 hinauskragen. Hierbei versteht es sich, dass ein derartig wirksames Stoßschutzelement auch weiter nach radial außen gezogen werden kann, um seine Aufgabe als Stoßschutz, insbesondere in Bezug auf die Beschichtung 3 besonders am Walzenende 5, noch effektiver erfüllen zu können. Auf diese Weise werden insbesondere Beschädigungen der Beschichtung, 3 im Bereich des Walzenendes 5 vermieden, welches naturgemäß äußeren Einflüssen gegenüber wesentlich anfälliger ist, da es in der Regel leicht zugänglich und an exponierter Position zu finden ist, und von welchem ausgehend bei derartigen Beschädigungen gerade wieder die Gefahr einer Unterrostung gegeben sein kann.

Auch die Dichtelemente 6 der anderen Ausführungsbeispiele können als Stoßschutzelemente genutzt werden, wenn sie bis ausreichend nach radial außen bzw. axial außen am Walzenende vorgesehen sind. Dieses ist beispielhaft anhand der Ausführungsbeispiel nach Figuren 9 und 10 dargestellt, die im Übrigen den Ausführungsbeispielen nach Figuren 2 und 3 entsprechen. Wie unmittelbar ersichtlich, können nach dem Anbringen der Stoßschutzelemente 19 bei den Ausführungsbeispielen der Figuren 9 und 10, die Bereich aufweisen, die radial weit vorkragen, und dem Aufbringen der Beschichtung 3, die Beschichtung 3 und das Stoßschutzelement 19 bündig auf einen Radius abgeschliffen oder sonstwie abgetragen werden, so dass eine entsprechend durchgängige Walzenoberfläche sichergestellt ist. Alternativ kann sogar vorgesehen sein, dass das Stoßschutzelement 19 radial weiter vorkragt als die Beschichtung, um den Schutz noch zu verbessern, was jedoch ggf. nachteilig hinsichtlich der nutzbaren Walzenbreite sein kann, wobei ggf. das Stoßschutzelement 19 auch axial vorkragen kann, um wiederrum nutzbare Walzenfläche zu gewinnen.

Wie unmittelbar ersichtlich, wird bei dem Ausführungsbeispiel nach Figur 9 der Nachteil in Kauf genommen, das die Beschichtung 3 das Dichtelement 6 nicht mehr radial außen überdeckt, was bei der Lösung nach Figur 10 gerade teilweise noch der Fall ist.

Wie unmittelbar ersichtlich, können die in den Figuren 2 bis 7 dargestellten Anordnungen ohne weiteres nach an sich gängigen Beschichtungsverfahren, wie diese beispielsweise in der WO 2004/092599 A1 beschirieben sind, bereitgestellt werden, wobei ggf. bei der Umsetzung der Anordnungen nach Figuren 6 und 7 der für das Beschichtungsverfahren mit verlorenen Köpfen vorgesehene verlorene Kopf radial kleiner ausgebildet ist, als dieses für eine Beschichtung nach dem Stand der Technik vorgesehen würde. Auch versteht es sich, dass sämtliche nach dem Stand der Technik bekannten Beschichtungen 3, insbesondere auch wie sie nach den WO 2008/043350 A2 und WO 2008/052540 A2 offenbart sind, entsprechend eingesetzt werden können.

**Bezugszeichenliste:**

| | | | |
|---|---|---|---|
| 1 | Walze | 9 | Dichtschweißung |
| 2 | Walzenkörper | 10 | Ausnehmung |
| 2A | Rohr | 11 | Edelstahlauftragsschweißung |
| 2B | Trägerscheibe | 12 | Auftragslötung |
| 3 | Beschichtung | 13 | Dichtplatte |
| 4 | Walzenzapfen | 14 | Schraubverbindung |
| 5 | Walzenende | 15 | Dichtung |
| 6 | Dichtelement | 16 | Fortsatz |
| 7 | Naht zwischen Walzenkörper 2 und Beschichtung, 3 | 17 | Abdeckblech |
| | | 18 | Schraubverbindung |
| R | Edelstahlring | 19 | Stoßschutzelement |

## Patentansprüche

1. Walze (1) aus einem korrosionsgefährdeten Walzenkörper (2) und einer Beschichtung (3), wobei der Walzenkörper (2) aus einem zylinderförmigen durch ein Rohr (2A) gebildeten Bereich und aus Randbereichen gebildet ist, die Walzenzapfen (4) tragen oder aufweisen, **gekennzeichnet durch** ein am Walzenende (5) auf dem Walzenkörper (2) unter der Beschichtung (3) angeordnetes Dichtelement (6) aus einem von dem Material der Beschichtung (3) abweichenden Dichtmaterial, welches die Naht (7) zwischen dem Walzenkörper (2) und der Beschichtung (3) überdeckt.

2. Walze (1) nach Anspruch 1, **dadurch gekennzeichnet, dass** das Dichtelement (6) stoffschlüssig mit der Beschichtung (3) verbunden ist.

3. Walze (1) nach einem der vorstehenden Ansprüche, **dadurch gekennzeichnet, dass** das Dichtelement (6) stoffschlüssig mit dem Walzenkörper (2) verbunden ist.

4. Walze (1) nach einem der vorstehenden Ansprüche, **dadurch gekennzeichnet, dass** das Dichtelement (6) in einer Ausnehmung (10) des Walzenkörpers (2) angeordnet ist.

5. Walze (1) nach einem der vorstehenden Ansprüche, **dadurch gekennzeichnet, dass** die Beschichtung (3) am Walzenende (5) einen einstückig nach radial innen weisenden Fortsatz (16) aufweist.

6. Walze (1) nach einem der vorstehenden Ansprüche, **dadurch gekennzeichnet, dass** der Walzenkörper (2) bis an das Walzenende (5) heran zylinderförmig ausgebildet und das Dichtelement (6) auf den Walzenkörper (2) radial aufgesetzt ist.

7. Walze (1) nach einem der vorstehenden Ansprüche, **dadurch gekennzeichnet, dass** das Dichtelement (6) axial über die Beschichtung (3) hinauskragt.

8. Walze (1) nach einem der vorstehenden Ansprüche, **dadurch gekennzeichnet, dass** das Dichtelement (6) radial bündig mit der äußeren Beschichtungsoberfläche ausgebildet ist oder hierüber radial hinauskragt.

9. Walze (1) aus einem korrosionsgefährdeten Walzenkörper (2) und einer Beschichtung (3), wobei der Walzenkörper (2) aus einem zylinderförmigen durch ein Rohr (2A) gebildeten Bereich und aus Randbereichen gebildet ist, die Walzenzapfen (4) tragen oder aufweisen, **gekennzeichnet durch** ein am Walzenende (5) an dem Walzenkörper (2) angeordnetes, die Beschichtung (3) berührendes Stoßschutzelement (19) aus einem von dem Material der Beschichtung (3) abweichenden Stoßschutzmaterial, wobei das Stoßschutzelement (19) radial bündig mit der äußeren Beschichtungsoberfläche ausgebildet ist oder hierüber radial hinauskragt.

10. Walze (1) nach Anspruch 9, **dadurch gekennzeichnet, dass** das Stoßschutzelement (19) aus nicht korrodierendem Metall oder aus einem von dem Material der Beschichtung (3) abweichenden Dichtmaterial als Dichtelement (6) ausgebildet ist und die Naht (7) zwischen dem Walzenkörper (2) und der Beschichtung (3) überdeckt.

11. Walzenbeschichtungsverfahren, bei dem zunächst ein Dichtelement (6) am Walzenende (5) angebracht und anschließend eine Beschichtung (3) auf die Mantelfläche des zylinderförmigen Walzenkörpers (2) und auch über das Dichtelement (6) aufgetragen wird, **dadurch gekennzeichnet, dass** das Dichtelement aus einem von dem Material der Beschichtung abweichenden, metallischen Material ausgeführt ist.

12. Walzenbeschichtungsverfahren nach Anspruch 11, **dadurch gekennzeichnet, dass** zunächst an dem Walzenende (5) eine Ausnehmung (10) vorgesehen wird.

13. Walzenbeschichtungsverfahren, bei dem zunächst ein Stoßschutzelement (19) am Walzenende (5) angebracht und eine Beschichtung (3) auf die Mantelfläche des zylinderförmigen Walzenkörpers (2) das Stoßschutzelement (19) berührend aufgetragen wird, **dadurch gekennzeichnet, dass** und anschließend die Beschichtung (3) und das Stoßschutzelement (19) radial bündig abgetragen werden und das Material des Stoßschutzelements (19) und der Beschichtung (3) verschieden sind.

## Claims

1. A roller (1), made of a roller body (2) at risk of corrosion, and a coating (3), wherein
the roller body (2) is formed from a cylindrical region formed by a tube (2A), and from edge regions, which support or are roller journals (4),
**characterised by**
a sealing element (6) arranged at the roller end (5) on the roller body (2) under the coating (3), made of a sealing material differing from the material of the coating (3), which covers the seam (7) between the roller body (2) and the coating (3).

2. The roller (1) in accordance with claim 1,
**characterised in that**,
the sealing element (6) is securely bonded with the coating (3).

3. The roller (1) in accordance with one of the preceding claims,
**characterised in that**,
the sealing element (6) is securely bonded with the roller body (2).

4. The roller (1) in accordance with one of the preceding claims,
**characterised in that**,
the sealing element (6) is arranged in a recess (10) of the roller body (2).

5. The roller (1) in accordance with one of the preceding claims,
**characterised in that**,
at the roller end (5) the coating (3) has an integral extension facing radially inwards.

6. The roller (1) in accordance with one of the preceding claims,
**characterised in that**,
the roller body (2) is designed to be cylindrical in shape up to the roller end (5), and the sealing element (6) is fitted radially onto the roller body (2).

7. The roller (1) in accordance with one of the preceding claims,
**characterised in that**,
the sealing element (6) projects axially beyond the coating (3).

8. The roller (1) in accordance with one of the preceding claims,
**characterised in that**,
the sealing element (6) is designed to be radially flush with the outer coating surface, or projects radially beyond the latter.

9. A roller (1) made of a roller body (2) at risk of corrosion, and a coating (3), wherein
the roller body (2) is formed from a cylindrical region formed by a tube (2A) and from edge regions, which support or are roller journals (4), **characterised by**
an impact protection element (19) arranged on the roller body (2), in contact with the coating (3), made of an impact protection material differing from the material of the coating (3), wherein
the impact protection element (19) is designed to be radially flush with the outer coating surface, or projects radially beyond the latter.

10. The roller (1) in accordance with claim 9,
**characterised in that**,
the impact protection element (19) is designed from a non-corroding metal, or from a sealing material, as a sealing element, differing from the material of the coating (3), and covers the seam (7) between the roller body (2) and the coating (3).

11. A roller coating method, in which a sealing element (6) is firstly fitted onto the roller end (5), and a coating (3) is subsequently applied onto the shell surface of the cylindrical roller body (2), and also over the sealing element (6),
**characterised in that**,
the sealing element is embodied from a metallic material differing from the material of the coating.

12. The roller coating method in accordance with claim 11,
**characterised in that**,
a recess (10) is firstly provided at the roller end (5).

13. A roller coating method, in which an impact protection element (19) is firstly fitted onto the roller end (5), and a coating (3) is applied onto the shell surface of the cylindrical roller body (2), in contact with the impact protection element (19),
**characterised in that**,
the coating (3) and the impact protection element (19) are subsequently applied in a radially flush manner, and the material of the impact protection element (19) differs from that of the coating (3).

## Revendications

1. Cylindre (1) composé d'un corps de cylindre sujet à la corrosion (2) et d'un revêtement (3), le corps de cylindre (2) étant composé d'une partie de forme cylindrique constituée par un tuyau (2A) et de parties périphériques qui supportent des tourillons de cylindre (4), **caractérisé par** un élément d'étanchéité (6) disposé à l'extrémité du cylindre (5) sur le corps de cylindre (2) sous le revêtement (3) et composé d'un matériau d'étanchéité différent du matériau du revêtement (3) et qui recouvre la jointure (7) entre le corps de cylindre (2) et le revêtement (3).

2. Cylindre (1) selon la revendication 1, **caractérisé en ce que** l'élément d'étanchéité (6) est raccordé en correspondance de matériau avec le revêtement (3).

3. Cylindre (1) selon une des revendications précédentes, **caractérisé en ce que** l'élément d'étanchéité (6) est raccordé en correspondance de matériau avec le corps de cylindre (2).

4. Cylindre (1) selon une des revendications précédentes, **caractérisé en ce que** l'élément d'étanchéité (6) est disposé dans un évidement (10) du corps de cylindre (2).

5. Cylindre (1) selon une des revendications précédentes, **caractérisé en ce que** le revêtement (3) présente à l'extrémité du cylindre (5) un prolongement monobloc tourné radialement vers l'intérieur (16).

6. Cylindre (1) selon une des revendications précédentes, **caractérisé en ce que** le corps de cylindre (2) est réalisé en forme cylindrique jusqu'à l'extrémité du cylindre (5) et que l'élément d'étanchéité (6) est posé radialement sur le corps de cylindre (2).

7. Cylindre (1) selon une des revendications précédentes, **caractérisé en ce que** l'élément d'étanchéité (6) déborde axialement du revêtement (3).

8. Cylindre (1) selon une des revendications précédentes, **caractérisé en ce que** l'élément d'étanchéité (6) est réalisé de manière radialement à ras de la surface extérieure du revêtement ou déborde radialement de celui-ci.

9. Cylindre (1) composé d'un corps de cylindre sujet à la corrosion (2) et d'un revêtement (3), le corps de cylindre (2) étant composé d'une partie de forme cylindrique constituée par un tuyau (2A) et de parties périphériques qui supportent ou présentent des tourillons de cylindre (4), **caractérisé par** un élément de protection contre les chocs (19) disposé à l'extrémité du cylindre (2) au niveau du corps de cylindre (2), touchant le revêtement (3) et composé d'un matériau de protection contre les chocs différent du matériau du revêtement (3), l'élément de protection contre les chocs (19) étant réalisé de manière à être radialement à ras de la surface extérieure du revêtement ou débordant radialement de celle-ci.

10. Cylindre (1) selon la revendication 9, **caractérisé en ce que** l'élément de protection contre les chocs (19) est composé de métal ne rouillant pas ou d'un matériau d'étanchéité différent du matériau du revêtement (3) et faisant office d'élément d'étanchéité (6) et recouvre la jointure (7) entre le corps de cylindre (2) et le revêtement (3).

11. Procédé de revêtement de cylindre, dans lequel un élément d'étanchéité (6) est d'abord installé à l'extrémité du cylindre (5) puis un revêtement (3) est appliqué sur la surface d'enveloppe du corps de cylindre de forme cylindrique (2) et également au-dessus de l'élément d'étanchéité (6), **caractérisé en ce que caractérisé en ce que** l'élément d'étanchéité est réalisé à partir d'un matériau métallique différent du matériau du revêtement.

12. Procédé de revêtement de cylindre selon la revendication 11, **caractérisé en ce qu'**un évidement (10) est d'abord prévu à l'extrémité du cylindre (5).

13. Procédé de revêtement de cylindre, dans lequel un élément de protection contre les chocs (19) est d'abord installé à l'extrémité du cylindre (5) et un revêtement (3) est appliqué sur la surface d'enveloppe du corps de cylindre de forme cylindrique (2) de manière à être contact avec l'élément de protection contre les chocs (19), **caractérisé en ce que** le revêtement (3) et l'élément de protection contre les chocs (19) sont ensuite abrasés à ras radialement et que le matériau de l'élément de protection contre les chocs (19) et celui du revêtement (3) sont différents.
